# EUROPÄISCHE PATENTSCHRIFT

(11) **EP 1 402 241 B1**
(45) Veröffentlichungstag und Bekanntmachung des Hinweises auf die Patenterteilung: **06.01.2010**
(21) Anmeldenummer: 02743209.5
(22) Anmeldetag: 15.06.2002
(51) Int. Cl.: G01L 19/06, G01M 3/16

(54) **DRUCKMITTLER MIT VORRICHTUNG ZUR ERKENNUNG VON MEMBRANBRÜCHEN**
PRESSURE TRANSMISSION SYSTEM COMPRISING A DEVICE FOR IDENTIFYING MEMBRANE RUPTURES
SYSTEME DE TRANSMISSION DE PRESSION A DISPOSITIF DE RECONNAISSANCE DE RUPTURE DE MEMBRANE

(30) Priorität: 30.06.2001 DE 10131855
(43) Veröffentlichungstag der Anmeldung: 31.03.2004
(73) Patentinhaber: Endress + Hauser GmbH + Co. KG, 79689 Maulburg (DE)
(72) Erfinder: WOEST, Wolfgang, 79618 Rheinfelden (DE)
(74) Vertreter: Andres, Angelika Maria
(86) Internationale Anmeldenummer: PCT/EP2002/006613
(87) Internationale Veröffentlichungsnummer: WO 2003/004984

(56) Entgegenhaltungen:
- EP-A- 0 838 672
- DE-A- 3 941 369
- DE-A- 4 235 684

## Beschreibung

Die Erfindung bezieht sich auf einen Druckmittler zur Übertragung eines Drucks von einem in einem ersten Medium vorherrschenden Druck auf ein zweites Medium.

Genauer betrifft die Erfindung Druckmittler mit
- einem Grundkörper;
- einer Trennmembran, die mit ihrem Rand an dem Grundkörper befestigt ist, wobei die Trennmembran mit ihrer ersten, dem Grundkörper abgewandten Oberfläche mit dem ersten Medium in Kontakt gebracht werden kann, und mit ihrer zweiten, dem Grundkörper zugewandten Oberfläche und dem Grundkörper eine Druckkammer bildet, die mit dem zweiten Medium befüllbar ist, wobei die Druckkammer eine Druckkammeröffnung aufweist, durch welche der Druck mittels des zweiten Mediums übertragen werden kann; und
- einem Sensor, zur Überwachung einer Eigenschaft eines in der Kammer enthaltenen Mediums.

Die gattungsgemäßen Druckmittler werden unter anderem bei der Druckmessung in aggressiven Medien eingesetzt, wobei die Trennmembran mit einem aggressiven ersten Medium beaufschlagt wird und den im ersten Medium vorherrschenden Druck auf ein zweites Medium in der Druckkammer überträgt, von wo er über eine geeignete Druckzuleitung einer Druckmeßzelle zugeführt wird. Eine Druckübertragung mit einem Druckmittler und einer angeschlossenen Druckleitung kann aber auch bei nicht aggressiven Medien erwünscht sein, um große Strecken zwischen dem ersten Medium und dem Ort des Druckmeßzelle zu überbrücken.

Zur Druckübertragung werden als zweites Medium vorzugsweise inkompressible Öle verwendet. Insofern als ein solches Medium geeignet ist, ein Meßmedium zu kontaminieren, und aus verschiedenen anderen Gründen ist es erforderlich, ein Leck in der Trennmembran oder einen Bruch der Trennmembran frühzeitig zu erkennen. Hierzu offenbart Bastiaan in der Europäische Patentanmeldung EP 0 838 672 einen Druckmittler, bei dem die Druckkammer neben der Druckkammeröffnung eine zweite Öffnung aufweist, die als Sackloch ausgebildet ist, in dem die Elektrode eines Leitfähigkeitssensors angeordnet ist. Wenn nun die Trennmembran bricht, diffundiert das erste Medium in die Druckkammer und in die zweite Öffnung, woraufhin eine Veränderung der Leitfähigkeit nachweisbar ist, falls das erste Medium eine Leitfähigkeit aufweist, die wesentlich von der des zweiten Mediums abweicht. Dies ist insbesondere dann der Fall, wenn daß erste Medium ein korrosives Medium und das zweite Medium ein Öl ist.

Für die unterschiedlichen Druckmeßanwendungen gibt es eine unübersehbare Vielfalt an Druckmittlern, die den jeweiligen Anforderungen angepaßt sind. Es erfordert einen sehr hohen Fertigungsaufwand, diese Vielfalt von Sensoren mit der von Bastiaan vorgeschlagenen Leitfähigkeitssonde auszustatten. Zudem erfordert die Anordnung nach Bastiaan einen Mindestdurchmesser von 1,5 Zoll bzw. 3,8 cm, um den Leitfähigkeitssensor neben der Druckzuleitung anzuordnen, wie aus einer dem Gegenstand der Anmeldung entsprechenden Produktbeschreibung "Badoterm's MDS Diaphragm Leakage Detection System" der Anmelderin hervorgeht. Die genannte Einschränkung ist für viele Anwendungen inakzeptabel.

Zudem erfolgt der Transport der Verunreinigungen zum Sensor beim beschriebenen Druckmittler rein diffusiv. Dies kann je nach Tiefe des Sacklochs und je nach Einbaubedingungen des Druckmittlers zu einer großen Zeitverzögerung zwischen dem Auftreten eines Lecks und dem Nachweis der daraus resultierenden Verunreinigung führen.

Die Offenlegungsschrift DE 42 35 684 A1 offenbart ein Druckmessgerät mit einem Druckmittler und einer Spüleinrichtung, welche es ermöglicht, die Druckkammer des Druckmittlers zu reinigen, um eindiffundierte Atome, Ionen oder Moleküle zu entfernen. Ein Teil der Spülflüssigkeit kann einem Sensor zugeführt werden, um anhand der eindiffundierten Substanzen einen Membranbruch zu erkennen. Diese Lösung mag zwar prinzipiell funktionieren, sie ist aber aufgrund der Kosten für die Spülvorrichtung sehr teuer. Während der Spülung steht zudem das Druckmessgerät für eine Druckmessung nicht zur Verfügung.

Es ist daher die Aufgabe der vorliegenden Erfindung einen verbesserten Druckmittler vorzuschlagen, der die Nachteile des Stands der Technik überwindet.

Erfindungsgemäß wird die Aufgabe gelöst durch die Vorrichtungen gemäß dem unabhängigen Anspruch 1. Weitere Vorteile und Gesichtspunkte ergeben sich aus den abhängigen Ansprüchen der Beschreibung und den Zeichnungen.

Die erfindungsgemäße Vorrichtung zur Übertragung eines Drucks von einem in einem ersten Medium vorherrschenden Druck mittels eines zweiten Mediums auf eine Druckmesszelle, umfasst
einen Grundkörper; eine Treinnmembran, die mit ihrem Rand an dem Grundkörper befestigt ist,
wobei die Trennmembran mit ihrer ersten, dem Grundkörper abgewandten Oberfläche mit dem ersten Medium in Kontakt gebracht werden kann, und mit ihrer zweiten, dem Grundkörper zugewandten Oberfläche und dem Grundkörper eine Druckkammer bildet, die mit dem zweiten Medium befüllbar ist,
wobei die Druckkammer eine Druckkammeröfmung aufweist, eine Druckzuleitung, die über die Druckkammeröfinung mit der Druckkammer in Fließverbindung steht,
wobei der Druck durch die Druckzuleitung mittels des zweiten Mediums zu einer Druckmesszelle zu übertragen ist; und einen Sensor, zur Überwachung einer Materialeigenschaft des zweiten Mediums,
dadurch gekennzeichnet,
dass der Sensor über die Druckkammeröffnung mit der Druckkammer in Fließverbindung steht.

Vorzugsweise ist der Sensor ein Leitfähigkeitssensor. Weiterhin kann der Sensor ein kapazitiver Sensor sein, der die relative Dielektrizitätskonstante des zweiten Mediums überwacht.

Nach dem Auftreten eines Lecks in der Trennmembran werden die Materialeigenschaften des zweiten Mediums durch Verunreinigungen aus dem ersten Medium verändert. Insofern als die Verunreinigungen sich zumindest bei konstanter Temperatur und konstantem Druck im wesentlichen diffusiv ausbreiten, sollte der Sensor bevorzugt höchstens so weit von der Trennmembran entfernt sein, daß die zu erwartende Diffusionszeit der Verunreinigungen von einem Leck in der Membran zum Sensor eine vorgegebene Zeitspanne nicht überschreitet. Je nach Erfordernis, weiches im wesentlichen durch das Einsatzgebiet des Sensors vorgegeben ist, kann dieses Zeitintervall im Bereich von Minuten, Stunden, Tagen oder Wochen liegen. Um den erfindungsgemäßen Druckmittler möglichst universell einsetzen zu können, sollte das Sensorelement mit möglichst geringem Abstand zur Trennmembran angeordnet sein.

Wenn der Sensor ein Leitfähigkeitssensor ist, umfaßt er mindestens zwei voneinander beabstandete Elektroden, wobei der Raum zwischen den Elektroden zumindest teilweise mit dem zweiten Medium gefüllt ist. Der Sensor kann beispielsweise eine erste und eine zweite Elektrode aufweisen, die jeweils voneinander und gegenüber dem Grundkörper bzw. einer Druckzuleitung elektrisch isoliert sind, oder der Sensor kann eine erste Elektrode aufweisen, die gegenüber dem Grundkörper bzw. einer Druckzuleitung isoliert ist, wobei der Grundkörper bzw. die Druckzuleitung als Gegenelektrode dient. Ein kapazitiver Sensor kann die gleiche Anordnung der Elektroden wie ein Leitfähigkeitssensor aufweisen.

In einer bevorzugten Ausführungsform umfaßt der Grundkörper des Druckmittlers einen Leitungsanschluß zur Verbindung mit einer Druckzuleitung, mittels derer der Druck zu einem Druckwandler übertragen wird. Die Druckkammeröffnung mündet in diesem Leitungsanschluß. Der Sensor kann nun beispielsweise in dem Leitungsanschluß oder in einem Anschlußadapter angeordnet sein, mit dem die Druckzuleitung an den Leitungsanschluß angeschlossen wird.

Das Anschlußadapter umfaßt einen Druckmittleranschluß, welcher komplementär ist zu dem dem Leitungsanschluß, und eine Druckleitungsaufnahme. Das Anschlußadapter umfaßt zudem eine erste Elektrode und eine zweite Elektrode des Sensors. Die Druckleitungsaufnahme kann beispielsweise eine Kammer in dem Anschlußadapter aufweisen, in welcher die Druckzuleitung mündet. Die erste Elektrode und die zweite Elektrode können beispielsweise mittels einer Glasdurchführung in einer Öffnung der Kammer befestigt sein. Besonders bevorzugt ist die Druckzuleitung ebenfalls mittels einer Glasdurchführung, insbesondere der gleichen Glasdurchführung, befestigt.

Die Anordnung des Sensors zur Überwachung einer Materialeigenschaft des Übertragungsmediums in der Druckkammeröffnung oder in einem anderen mit der Druckkammer über die Druckkammeröffnung kommunizierenden Abschnitt hat weiterhin den Vorteil, daß es auch zu einem Transport der Verunreinigungen durch Konvektion bzw. durch Fluß des Übertragungsmediums kommt.

Dies sollte häufig eine schnellere Nachweisbarkeit der Verunreinigungen bewirken als der rein diffusive Transport der Verunreinigungen, wie er bei der Anordnung gemäß Bastiaan auftritt. Geht man beispielsweise von einem Arbeitsvolumen der Druckkammer von 100 mm³ und einem Öffnungsdurchmesser von 1 mm aus, aus, so bedeutet eine Verdrängung des gesamten Arbeitsvolumens bei einem Überlastdruckschlag eine Verschiebung des Übertragungsmediums in der Öffnung um etwa 127 mm. Auf diese Weise können die Verunreinigungen mit dem Übertragungsmedium erheblich schneller zum Sensor gelangen, als dies mit der Anordnung gemäß Bastiaan der Fall ist.

Gleichermaßen können Temperaturschwankungen zu einem konvektiven Transport der Verunreinigungen führen. Eine Temperaturänderung in der Druckzuleitung von beispielsweise 10°C führt bei einem Volumenausdehnungskoeffizienten von etwa 10⁻³/K bei einer Druckzuleitungslänge von 10 m und einem Innendurchmesser von 1 mm zu einer Volumenänderung von etwa 80 mm³, was einer Verschiebung der Flüssigkeitssäule von etwa 100 mm am Ende der Druckzuleitung entspricht. Der beschriebene konvektive Transport zu dem Sensor ist um so effektiver, je größer die Länge der Druckzuleitung im Verhältnis zum Abstand des Sensors von der Trennmembran ist.

Zur optimalen Ausnutzung dieses Effekts sollten die Elemente des Sensors, beispielsweise die Elektroden eines Leitfähigkeitssensors möglichst in einem Bereich der Druckkammeröffnung, der Druckzuleitung, oder eines Anschlußadapters zwischen Druckmittler und Druckzuleitung angeordnet sein, der von dem beschriebenen Konvektionsstrom durchströmt wird oder unmittelbar an einen solchen Bereich angrenzt.

Die Erfindung wird anhand der nachfolgenden Zeichnungen näher erläutert. Es zeigt:
Fig. 1: Eine perspektivische Schnittzeichnung eine bevorzugte Ausführungsform eines erfindungsgemäßen Druckmittlers.
Fig. 2: Eine bevorzugte Ausführungsform eines erfindungsgemäßen Anschlußadapters.

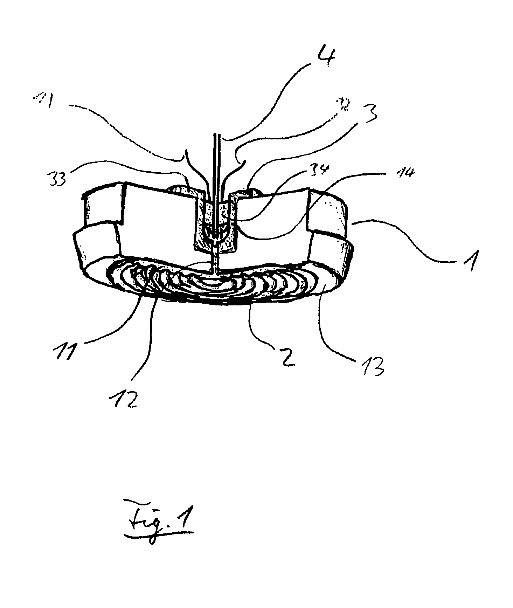

Der in Fig. 1 gezeigte Druckmittler umfaßt einen Grundkörper 1, welcher vorzugsweise einen im wesentlichen zylindersymmetrischen Aufbau aufweist. An der Stirnseite 13 des Grundkörpers ist eine Trennmembran 2 mit ihrem Rand 21 befestigt, so daß zwischen der Trennmembran 2 und dem Grundkörper eine Druckkammer 11 ausgebildet ist. Die Stirnseite 13 des Grundkörpers 1 kann in üblicher Weise mit einem Membranbett vesehen sein, gegen welches die Trennmembran 2 im Überlastfall gedrückt wird.

Die Druckkammer 11 weist eine Öffnung 12 zur Übertragung des in der Druckkammer vorherrschenden Drucks auf. Die Öffnung 12 ist bevorzugt als Kapillarleitung ausgebildet.
Die Öffnung 12 erstreckt sich bei der bevorzugten Ausführungsform bis zu einem Druckleitungsanschluß 14, der vorzugsweise als im wesentlichen zylindrische bzw. axialsymmetrische Vertiefung in der von der Trennmembran 2 abgewandten Stirnfläche des Grundkörpers 1 ausgebildet ist.

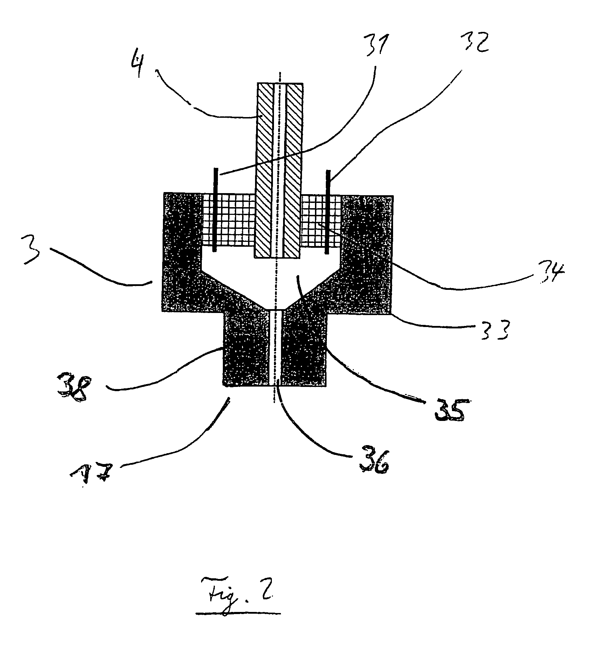

Der Anschluß der Druckzuleitung 4 erfolgt bei der bevorzugten Ausführungsform mittels eines Anschlußadapters 3, in welches der Sensor zur Überwachung einer Materialeigenschaft des Übertragungsmediums integriert ist. Einzelheiten des Anschlußadapters 3 werden nun unter zusätzlicher Bezugnahme auf Fig. 2 beschrieben. Die Proportionen einzelner Elemente der in Fig. 2 gezeigten Ausführungsform eines Anschlußadapters unterscheiden sich von denen der Ausgestaltung des Anschlußadapters in Fig. 1. In beiden Zeichnungen werden jedoch für entsprechende Elemente identische Bezugszeichen verwendet.

Das Anschlußadapter 3 umfaßt einen zu dem Leitungsanschluß 14 komplementären Druckmittleranschluß 37 und eine Druckleitungsaufnahme, die in einem vorzugsweise zylindrischen, ersten Abschnitt 33 ausgebildet ist. Das Anschlußadapter 3 umfaßt zudem eine erste Elektrode 31 und eine zweite Elektrode 32 des Sensors.

Der Druckmiftleranschluß 37 kann beispielsweise einen im wesentlichen zylindrischen oder konischen Vorsprung umfassen, welcher sich in axialer Richtung von einer Sirnfläche des ersten Abschnitts 33 erstreckt und einen Kanal 36 aufweist, durch den eine Fließverbindung zwischen der Druckkammeröffnung 12 des Druckmittlers 1 und der Druckleitungsaufnahme bewirkt wird.

Insofern, als der zylindrische Vorsprung einen kleineren Radius aufweist als der erste Abschnitt 33, dient die Stirnfläche des ersten Abschnitts außerhalb des zylindrischen Vorsprungs als axiale Anschlagfläche, welche die Position des Anschlußadapters 3 bezüglich des Grundkörpers 1 definiert und zugleich eine (ggf. zusätzliche) Abdichtung zwischen dem Grundkörper 1 und dem Anschlußadapter 3 bewirkt.

Die Mantelfläche 38 des im wesentlichen zylindrischen Vorsprungs kann ggf. mit einem Außengewinde versehen sein, welches zu einem Innengewinde in der Wandung des Druckleitungsanschluß 14 komplementär ist.

Die Druckleitungsaufnahme kann beispielsweise eine Kammer 35 in dem Anschlußadapter 3 aufweisen, in welcher die Druckzuleitung 4 mündet. Der Sensor zur Überwachung einer Materialeigenschaft des zweiten Mediums, hier der elektrischen Leitfähigkeit, ist ebenfalls in der Druckleitungsaufnahme angeordnet. Die erste Elektrode 31 und die zweite Elektrode 32 des Sensors können beispielsweise mittels einer Glasdurchführung 34 in einer Öffnung der Kammer 35 befestigt sein. Vorzugsweise ist die Druckzuleitung ebenfalls mittels einer Glasdurchführung, befestig, wobei insbesondere die gleiche Glasdurchführung 34 verwendet werden kann. Gleichermaßen ist es möglich, die beiden Elektroden bzw. die Druckzuleitung jeweils in einer separaten Öffnung mittels einer Glasdurchführung oder einem anderen geeigneten Befestigungsmittel zu befestigen.

Die Kammer 35 sollte einerseits hinreichend groß sein, damit die Elektroden sicher voneinander isoliert positioniert sein können, und damit sich zwischen den Elektroden ein geeigneter mit dem zweiten Medium bzw. einer Übertragungsflüssigkeit erfüllter Raum erstreckt. Zudem sollte der Transport von Verunreinigungen in die Umgebung der Elektroden möglichst schnell erfolgen. Deshalb sollten möglichst kurze und direkte Pfade mit großen Querschnitten zwischen dem Kanal 36 im Druckmittleranschluß 37 und den Elektroden gegeben sein. Insofern als der Kanal 36 ebenfalls ein Abschnitt des Pfades von Verunreinigungen ist, sollte auch der Kanal 36 einen möglichst geringen Diffusionswiderstand aufweisen. Andererseits ist das Gesamtvolumen der Übertragungsflüssigkeit im System möglichst gering zu halten, um den Einfluß von Temperaturschwankungen auf das Gesamtsystem zu minimieren.

Anstelle von zwei separaten Elektroden kann auch nur eine Elektrode vorgesehen sein, um die Leitfähigkeit zwischen dieser und dem Grundkörper bzw. der Kammer zu messen.

Druckzuleitung 4 ist vorzugsweise als Kapillarleitung ausgebildet. In der dargestellten Ausführungsform ist die Kapillarleitung röhrenförmig ausgebildet, sie kann jedoch auch als Bohrung in einem massiven Block, beispielsweise einem Trennkörper, ausgebildet sein, in den der Sensor und das Druckanschlußadapter oder ein Druckmittleranschluß integriert sein kann.

Die Druckzuleitung überträgt den im zweiten Medium vorhanden Druck zu einer nicht näher bezeichneten Druckmeßzelle, die ein druckabhängiges elektrisches Signal erzeugt.

Die Elektroden 31, 32 des Leitfähigkeitssensors sind mit einer geeigneten Auswertungsschaltung verbunden, welche die Leitfähigkeit des Übertragungsmediums überwacht. Die Überwachung kann beispielsweise kontinuierlich, periodisch oder ereignisgesteuert, beispielsweise auf Abfrage durch einen Mikroprozessor erfolgen.

Wenngleich derzeit Leitfähigkeitssensoren bevorzugte Sensoren zur Überwachung einer Materialeigenschaft des Übertragungsmediums sind, können die erfindungsgemäßen Druckmittler grundsätzliche auch andere Sensoren aufweisen. Geeignet sind weiterhin u.a. kapazitive Sensoren, pH-Sensoren, Photometer oder spezifische Adsorptionssensoren, welche die Anwesenheit einer ausgewählten Fremdsubstanz aus dem ersten Medium bzw. dem Prozeßmedium im Übertragungsmedium nachweisen.

## Patentansprüche

1. Vorrichtung zur Übertragung eines Drucks von einem in einem ersten Medium vorherrschenden Druck mittels eines zweiten Mediums auf eine Druckmesszelle, umfassend:
- einen Grundkörper (1);
- eine Trennmembran (2), die mit ihrem Rand an dem Grundkörper (1) befestigt ist, wobei die Trennmembran (1) mit ihrer ersten, dem Grundkörper (1) abgewandten Oberfläche mit dem ersten Medium in Kontakt gebracht werden kann, und mit ihrer zweiten, dem Grundkörper (1) zugewandten Oberfläche und dem Grundkörper (1) eine Druckkammer (11) bildet, die mit dem zweiten Medium befüllbar ist, wobei die Druckkammer (11) eine Druckkammeröffnung (12) aufweist,
- eine Druckzuleitung, die über die Druckkammeröffnung mit der Druckkammer in Fließverbindung steht, wobei der Druck durch die Druckzuleitung mittels des zweiten Mediums zu einer Druckmesszelle zu übertragen ist; und
- einen Sensor, zur Überwachung einer Materialeigenschaft des zweiten Mediums, wobei
der Sensor über die Druckkammeröffnung (12) mit der Druckkammer (11) in Fließverbindung steht.

2. Vorrichtung nach Anspruch 1, wobei der Sensor ein Leitfähigkeitssensor ist.

3. Vorrichtung nach Anspruch 2, wobei der Leitfähigkeitssensor eine erste Elektrode (31) und eine zweite Elektrode (32) aufweist, welche isoliert voneinander und von dem Grundkörper (1) angeordnet sind.

4. Vorrichtung nach Anspruch 2, wobei der Leitfähigkeitssensor eine Elektrode aufweist, welche isoliert von dem Grundkörper 1 angeordnet ist, um die Leitfähigkeit des zweiten Mediums zwischen der Elektrode und dem Grundkörper bzw. mit diesem leitend verbundenen Komponenten zu messen.

5. Vorrichtung nach Anspruch 3, wobei die Druckzuleitung (4) eine Kapillarleitung ist.

6. Vorrichtung nach Anspruch 3 oder 4 weiterhin umfassend ein Anschlußadapter (3), welches die Druckzuleitung (4) mit der Druckkammeröffnung verbindet.

7. Vorrichtung nach Anspruch 6, wobei das Anschlußadapter (3) den Sensor umfaßt.

8. Vorrichtung nach einem der vorhergehenden Ansprüche, wobei eine variable Druckbeaufschlagung der Trennmembran und/oder eine Volumenänderung des zweiten Mediums aufgrund von Temperaturschwankungen innerhalb eines vorgegebenen Arbeitsbereichs der Vorrichtung zu einem Fluß des zweiten Mediums durch die Druckkammeröffnung führt, wobei der Sensor in einer solchen Entfernung zur Druckkammer angeordnet ist, daß zumindest ein Teil des bei 50% des Nenndrucks und bei der mittleren Temperatur des Temperatumennbereichs der Vorrichtung in der Druckkammer enthaltenen Mediums bei einer Kompression der Druckkammer um nicht mehr als 30% vorzugsweise um nicht mehr als 20% besonders bevorzugt um nicht mehr als 10% bis zur Position des Sensors fließt.

## Claims

1. Unit for transferring a pressure present in a first medium to a pressure measuring cell with the aid of a second medium, comprising:
- a meter body (1);
- a process isolating diaphragm (2) whose edge is attached to the meter body (1), whereby the process isolating diaphragm (1) can be brought into contact with the first medium with its first surface, which faces away from the meter body (1), and forms a pressure chamber (11) with the meter body (1) and its second surface, which faces towards the meter body (1). Said chamber can be filled with the second medium whereby the pressure chamber (11) exhibits a pressure chamber opening (12);
- a pressure supply line which forms a flow connection with the pressure chamber via the pressure chamber opening, whereby the pressure is to be transmitted to a pressure measuring cell through the pressure supply line with the aid of the second medium;
- a sensor that monitors a material property of the second medium, whereby the sensor forms a flow connection with the pressure chamber (11) via the pressure chamber opening (12).

2. Unit as per Claim 1, where the sensor is a conductivity sensor.

3. Unit as per Claim 2, whereby the conductivity sensor exhibits a first electrode (31) and a second electrode (32), which are arranged isolated from one another and from the meter body (1).

4. Unit as per Claim 2, whereby the conductivity sensor exhibits an electrode which is arranged isolated from the meter body (1) to measure the conductivity of the second medium between the electrode and the meter body or with a component connected to the meter body such that a conductive connection takes place.

5. Unit as per Claim 3, where the pressure supply line (4) is a capillary tube.

6. Unit as per Claim 3 or 4 further comprising a connecting adapter (3) which connects the pressure supply line (4) to the pressure chamber opening.

7. Unit as per Claim 6, where the connecting adapter (3) comprises the sensor.

8. Unit as per one of the previous claims, whereby variable exposure of the process isolating diaphragm to pressure and/or a change in the volume of the second medium on account of temperature fluctuations within a predefined operating range of the unit causes the second medium to flow through the pressure chamber opening, whereby the sensor is arranged at such a distance from the pressure chamber that at least some of the medium in the pressure chamber at 50% of the nominal pressure and at the average temperature of the temperature measuring range of the unit flows as far as the position of the sensor, in the event of a compression in the pressure chamber, by not more than 30%, preferably by not more than 20% and particularly preferably by not more than 10%.

## Revendications

1. Dispositif destiné à la transmission d'une pression régnant dans un premier produit au moyen d'un deuxième produit vers une cellule de mesure de pression, comprenant :
- un corps de base (1) ;
- une membrane de séparation (2), dont le bord est fixé au corps de base (1), la membrane de séparation (1) pouvant être amenée avec sa première surface - opposée au corps de base (1) - en contact avec le premier produit, et formant une chambre de pression (11) avec sa deuxième surface - faisant face au corps de base (1) - et le corps de base (1), chambre qui peut être remplie par le deuxième produit, la chambre de pression (11) présentant une ouverture de chambre de pression (12),
- une conduite d'alimentation de pression, qui est en liaison d'écoulement avec la chambre de pression à travers l'ouverture de la chambre de pression, la pression étant transmise à travers la conduite d'alimentation de pression au moyen du deuxième produit vers une cellule de mesure de pression ; et
- un capteur destiné à la surveillance d'une propriété du deuxième produit, le capteur étant en liaison d'écoulement avec la chambre de pression (11) par l'intermédiaire de l'ouverture de chambre de pression (12).

2. Dispositif selon la revendication 1, pour lequel le capteur est un capteur de conductivité.

3. Dispositif selon la revendication 2, pour lequel le capteur de conductivité comporte une première électrode (31) et une deuxième électrode (32), lesquelles sont disposées de telle manière à être isolées l'une par à l'autre, et par rapport au corps de base (1).

4. Dispositif selon la revendication 2, pour lequel le capteur de conductivité comporte une électrode, laquelle est disposée de telle manière à être isolée par rapport au corps de base (1), afin de mesurer la conductivité du deuxième produit entre l'électrode et le corps de base, ou les composants reliés avec celui-ci au moyen d'une liaison conductrice.

5. Dispositif selon la revendication 3, pour lequel la conduite d'alimentation de pression (4) est une conduite capillaire.

6. Dispositif selon la revendication 3 ou 4, comprenant en outre un adaptateur de raccordement (3), qui relie la conduite d'alimentation de pression (4) avec l'ouverture de la chambre de pression.

7. Dispositif selon la revendication 6, pour lequel l'adaptateur de raccordement (3) comprend le capteur.

8. Dispositif selon l'une des revendications précédentes, pour lequel une mise en pression variable de la membrane de séparation et/ou une modification du volume du deuxième produit en raison de fluctuations de température conduit, à l'intérieur d'une plage de travail prédéfinie du dispositif, à un écoulement du deuxième produit à travers l'ouverture de la chambre de pression, le capteur étant disposé, par rapport à la chambre de pression, à une distance telle qu'au moins une partie du produit contenu dans la chambre de pression, à 50 % de la pression nominale et à la température moyenne de la plage de température nominale du dispositif, en cas de compression de la chambre de pression, s'écoule jusqu'au niveau du capteur d'un montant maximum de 30 %, de préférence d'un montant maximum de 20 % et particulièrement de préférence d'un montant maximum de 10 %.
